# EUROPEAN PATENT APPLICATION

(11) **EP 4 742 742 A1**
(43) Date of publication of application: **13.05.2026**
(21) Application number: 24850824.4
(22) Date of filing: 26.07.2024
(51) Int. Cl.: H04W 28/06

(54) **COMMUNICATION METHOD AND APPARATUS**

(30) Priority: 10.08.2023 CN 202311011226
(71) Applicant: Huawei Technologies Co., Ltd., Shenzhen, Guangdong 518129 (CN)
(72) Inventor: YANG, Pei, Shenzhen, Guangdong 518129 (CN); FAN, Bo, Shenzhen, Guangdong 518129 (CN); ZARIFI, Keyvan, Shenzhen, Guangdong 518129 (CN); CHEN, Lei, Shenzhen, Guangdong 518129 (CN); YU, Zheng, Shenzhen, Guangdong 518129 (CN)
(74) Representative: Gill Jennings & Every LLP
(86) International application number: PCT/CN2024/107964
(87) International publication number: WO 2025/031175

(57) **Abstract**

This application relates to a communication method and apparatus. In the method, when first information indicates an SDM scheme or an SFN scheme, second information may include two PTRS-DMRS fields, and one of the PTRS-DMRS fields is 0 bits. In this way, bit overheads of DCI can be reduced. In addition, a first field in the second information clearly indicates a specific transmission scheme to be used by a terminal device.

## Description

This application claims priority to Chinese Patent Application No. 202311011226.7, filed with the China National Intellectual Property Administration on August 10, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In communication technologies, a base station may schedule a terminal device by using downlink control information (downlink control information, DCI). Generally, a large amount of information needs to be indicated in the DCI, so that the terminal device performs subsequent uplink transmission. In other words, indicating the large amount of information needs a large number of bits (bits). Consequently, bit overheads of the DCI are excessively high.

### SUMMARY

This application provides a communication method and apparatus, to reduce bit overheads of DCI.

According to a first aspect, a communication method is provided. The method may be performed by a terminal device, may be performed by a module (for example, a processor, a chip, or a chip system) used in the terminal device, or may be implemented by a logical node, a logical module, or software that can implement all or some functions of the terminal device. In the communication method, first information may be received. The first information indicates a first transmission scheme, and the first transmission scheme includes a spatial domain multiplexing (spatial domain multiplexing, SDM) scheme or a single frequency network (single frequency network, SFN) scheme. Second information may be further received. The second information includes a first field, the first field indicates the terminal device to use the first transmission scheme or a second transmission scheme, and the second transmission scheme is a single transmission reception point (single transmitting and receiving point, sTRP) scheme. The second information further includes a second field and a third field, the second field is a phase tracking reference signal (phase tracking reference signal, PTRS)-demodulation reference signal (demodulation reference signal, DMRS) field, the third field is a 2^{nd} PTRS-DMRS field, and the third field is 0 bits.

It can be learned that in the foregoing implementation, when the first information indicates the SDM scheme or the SFN scheme, the second information may include two PTRS-DMRS fields, and one of the PTRS-DMRS fields is 0 bits. In this way, bit overheads of DCI can be reduced. In addition, the first field in the second information clearly indicates a specific transmission scheme to be used by the terminal device.

Optionally, with reference to the first aspect, the second field indicates at least one DMRS port associated with at least one PTRS port.

Optionally, with reference to the first aspect, when a maximum number of layers associated with the second transmission scheme is greater than 2, the third field is 0 bits. The maximum number of layers associated with the second transmission scheme is indicated by third information.

Optionally, with reference to the first aspect, the method further includes: sending capability information, where the capability information indicates that the terminal device supports full-coherent uplink transmission; and a number of PTRS ports associated with the SDM scheme is greater than or equal to 2.

It can be learned that in the foregoing implementation, when the terminal device supports full-coherent uplink transmission, the number of PTRS ports associated with the SDM scheme is greater than or equal to 2, so that different antenna panels can be associated with different PTRS ports when the terminal device performs data transmission based on the SDM scheme, thereby ensuring reliable SDM transmission.

Optionally, with reference to the first aspect, when both a maximum number of layers associated with the first transmission scheme and the maximum number of layers associated with the second transmission scheme are equal to 1, the second field is 0 bits. The maximum number of layers associated with the first transmission scheme is indicated by fourth information, and the maximum number of layers associated with the second transmission scheme is indicated by the third information.

It can be learned that in the foregoing implementation, a condition for the second field to be 0 bits is specified, so that reliable SDM transmission or SFN transmission can be ensured. In addition, when both the maximum number of layers associated with the first transmission scheme and the maximum number of layers associated with the second transmission scheme are equal to 1, a network device does not need to indicate, to the terminal device, the DMRS port associated with the PTRS port. In this way, the bit overheads of the DCI can be reduced.

Optionally, with reference to the first aspect, when a maximum number of layers associated with the first transmission scheme is greater than 1 or the maximum number of layers associated with the second transmission scheme is greater than 1, the second field is greater than 0 bits. The maximum number of layers associated with the first transmission scheme is indicated by fourth information, and the maximum number of layers associated with the second transmission scheme is indicated by the third information.

It can be learned that in the foregoing implementation, a condition for the second field to be greater than 0 bits is specified, so that reliable SDM transmission or SFN transmission can be ensured. This indicates that when the maximum number of layers associated with the first transmission scheme is greater than 1 or the maximum number of layers associated with the second transmission scheme is greater than 1, a network device needs to indicate, to the terminal device, the DMRS port associated with the PTRS port.

According to a second aspect, a communication method is provided. The method may be performed by a network device, may be performed by a module (for example, a processor, a chip, or a chip system) used in the network device, or may be implemented by a logical node, a logical module, or software that can implement all or some functions of the network device. In the communication method, first information may be sent. The first information indicates a first transmission scheme, and the first transmission scheme includes an SDM scheme or an SFN scheme. Second information may be further sent. The second information includes a first field, the first field indicates a terminal device to use the first transmission scheme or a second transmission scheme, and the second transmission scheme is an sTRP scheme. The second information further includes a second field and a third field, the second field is a PTRS-DMRS field, the third field is a 2^{nd} PTRS-DMRS field, and the third field is 0 bits.

Optionally, with reference to the second aspect, the second field indicates at least one DMRS port associated with at least one PTRS port.

Optionally, with reference to the second aspect, when a maximum number of layers associated with the second transmission scheme is greater than 2, the third field is 0 bits. The maximum number of layers associated with the second transmission scheme is indicated by third information.

Optionally, with reference to the second aspect, the method further includes: sending capability information, where the capability information indicates that the terminal device supports full-coherent uplink transmission; and a number of PTRS ports associated with the SDM scheme is greater than or equal to 2.

Optionally, with reference to the second aspect, when both a maximum number of layers associated with the first transmission scheme and the maximum number of layers associated with the second transmission scheme are equal to 1, the second field is 0 bits. The maximum number of layers associated with the first transmission scheme is indicated by fourth information, and the maximum number of layers associated with the second transmission scheme is indicated by the third information.

Optionally, with reference to the second aspect, when a maximum number of layers associated with the first transmission scheme is greater than 1 or the maximum number of layers associated with the second transmission scheme is greater than 1, the second field is greater than 0 bits. The maximum number of layers associated with the first transmission scheme is indicated by fourth information, and the maximum number of layers associated with the second transmission scheme is indicated by the third information.

According to a third aspect, a communication apparatus is provided, and includes a unit or a module configured to implement the method according to either the first aspect or the second aspect.

According to a fourth aspect, a communication apparatus is provided. The communication apparatus includes at least one processor and a memory. The memory is configured to store a computer program or instructions. The at least one processor is configured to execute the computer program or the instructions in the memory, to perform the method according to either the first aspect or the second aspect.

According to a fifth aspect, a communication system is provided. The communication system includes a terminal device and a network device. The terminal device is configured to perform the method according to any one of the implementations of the first aspect. The network device is configured to perform the method according to any one of the implementations of the second aspect.

According to a sixth aspect, a computer-readable storage medium is provided. The computer-readable storage medium stores computer instructions. When the computer instructions are executed, a computer is enabled to perform the method according to either the first aspect or the second aspect.

According to a seventh aspect, a computer program product is provided. The computer program product includes computer program code. When the computer program code is run by a computer, the computer is enabled to perform the method according to either the first aspect or the second aspect.

According to an eighth aspect, a chip is provided. The chip includes at least one processor and an interface. The processor is configured to read and execute instructions stored in a memory. When the instructions are run, the chip is enabled to perform the method according to either the first aspect or the second aspect.

### BRIEF DESCRIPTION OF DRAWINGS

The following briefly describes accompanying drawings used in describing embodiments.
FIG. 1 shows a basic architecture of a communication system according to an embodiment of this application;
FIG. 2 is a schematic flowchart of a communication method according to an embodiment of this application;
FIG. 3 is a diagram of a structure of a communication apparatus according to an embodiment of this application; and
FIG. 4 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing the associated objects, and represents that three relationships may exist. For example, A and/or B may represent the following three cases: Only A exists, both A and B exist, and only B exists, where A and B may be singular or plural. In addition, in the descriptions of this application, "a plurality of" means two or more unless otherwise specified. "At least one of the following items (pieces)" or a similar expression thereof means any combination of these items, including a singular item (piece) or any combination of plural items (pieces). For example, at least one of a, b, and (or) c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same network elements and purposes. A person skilled in the art may understand that the terms such as "first" and "second" do not limit a number or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and variants thereof all mean "including but not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In various embodiments of this application, unless otherwise specified or there is a logic conflict, terms and/or descriptions of different embodiments are consistent and may be mutually referenced, and technical features in different embodiments may be combined based on an internal logical relationship thereof, to form a new embodiment.

It should be understood that the technical solutions in embodiments of this application may be applied to a long term evolution (long term evolution, LTE) architecture, a 5th generation mobile communication technology (5th generation mobile network, 5G), a wireless local area network (wireless local area network, WLAN) system, a vehicle-to-everything (vehicle-to-everything, V2X) communication system, LTE-vehicle (LTE-vehicle, LTE-V), vehicle-to-vehicle (vehicle-to-vehicle, V2V), internet of vehicles, machine type communication (machine type communication, MTC), and the like. The technical solutions in embodiments of this application may be further applied to another future communication system, for example, a 6G communication system. In the future communication system, same functions may be maintained, but a name may be changed.

The following describes a basic architecture of a communication system provided in embodiments of this application. The communication system provided in this application may include one or more network devices and one or more terminal devices.

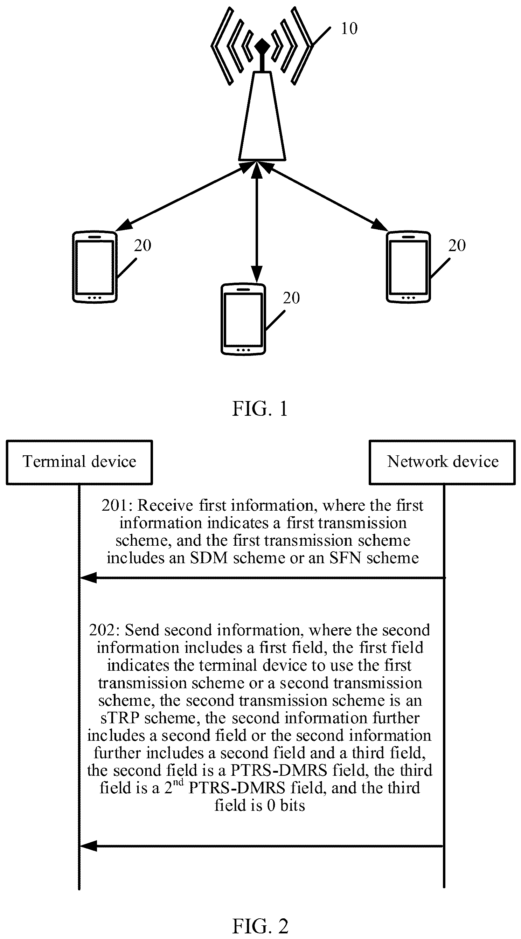

The following uses a system architecture shown in FIG. 1 as an example for description. As shown in FIG. 1, the communication system includes a network device 10 and one or more terminal devices (for example, terminal devices 20 in FIG. 1) communicating with the network device 10.

It should be noted that numbers of network devices and terminal devices in FIG. 1 are merely examples, and should not be considered as a specific limitation on this application. The following describes in detail the terminal device and the network device in the system architecture.

### I. Terminal device

The terminal device is an entity that is on a user side and that is configured to receive a signal, send a signal, or receive a signal and send a signal. The terminal device is configured to provide one or more of a voice service and a data connectivity service for a user. The terminal device may be a device that has a wireless transceiver function and that may cooperate with a network device to provide a communication service for the user. Specifically, the terminal device may be user equipment (user equipment, UE), an access terminal, a subscriber unit, a subscriber station, a mobile station, a remote station, a remote terminal, a mobile device, a terminal, a wireless communication device, a user agent, a user apparatus, or a road side unit (road side unit, RSU). The terminal device may alternatively be an uncrewed aerial vehicle, an internet of things (internet of things, IoT) device, a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a compute device or another processing device connected to a wireless modem, a vehicle-mounted device, a wearable device (which may also be referred to as a wearable smart device), a virtual reality (virtual reality, VR) terminal, an augmented reality (augmented reality, AR) terminal, a wireless terminal in remote medical (remote medical), a wireless terminal in industrial control (industrial control), a wireless terminal in self driving (self driving), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a terminal in a 5G system, or a terminal in a next generation communication system. This is not limited in embodiments of this application.

A device form of the terminal device is not limited in embodiments of this application. An apparatus for implementing a function of the terminal device may be a terminal device, or may be an apparatus, for example, a chip system, that can support the terminal device in implementing the function. The apparatus may be installed in the terminal device or used in matching with the terminal device. In embodiments of this application, the chip system may include a chip, or may include a chip and another discrete device.

### II. Network device

The network device is an entity that is on a network side and that is configured to send a signal, receive a signal, or send a signal and receive a signal. The network device may be an apparatus deployed in a radio access network (radio access network, RAN) to provide a wireless communication function for a terminal device.

In a possible scenario, the network device may be a device having a base station function, for example, an evolved NodeB (evolved NodeB, eNodeB), a transmission reception point (transmitting and receiving point, TRP), a transmitting point (transmitting point, TP), a next generation NodeB (next generation NodeB, gNB), a next generation base station in a 6G mobile communication system, an integrated access and backhaul (integrated access and backhaul, IAB) node, or a non-terrestrial network device in an NTN, that is, a device, a satellite, or the like that may be deployed on a high-altitude platform. The network device may be a transmission reception point (transmission reception point, TRP), a base station, or a control node in various forms, for example, a network controller or a wireless controller. Specifically, the network device may be a macro base station in various forms, a micro base station (also referred to as a small cell) in a heterogeneous network (heterogeneous network, HetNet) scenario, a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU) and a radio frequency unit (remote radio unit, RRU) in a distributed base station scenario, a transmission point (transmitting and receiving point, TRP), a transmitting point (transmitting point, TP), a mobile switching center, or the like, or may be an antenna panel of a base station. The control node may be connected to a plurality of base stations, and configure resources for a plurality of terminals covered by the plurality of base stations. In systems using different radio access technologies, names of a device having a base station function may be different. For example, the device may be a gNB in 5G, a network side device in a network after 5G, a network device in a future evolved public land mobile (communication) network (public land mobile network, PLMN), or a device that undertakes a base station function in device-to-device (device-to-device, D2D) communication, machine-to-machine (machine-to-machine, M2M) communication, or internet of vehicles communication. A specific name of the network device is not limited in this application. The network device may alternatively be a baseband unit pool (BBU pool), an RRU, or the like in an open access network (open RAN, O-RAN or ORAN) or a cloud radio access network (cloud radio access network, CRAN).

All or some functions of the network device in this application may alternatively be implemented by using a software function running on hardware, or may be implemented by using an instantiated virtualization function on a platform (for example, a cloud platform). The network device in this application may alternatively be a logical node, a logical module, or software that can implement all or some functions of the network device.

In another possible scenario, a plurality of network devices collaborate to assist a terminal device in implementing radio access, and different network devices separately implement some functions of a base station. For example, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

A form of the network device is not limited in embodiments of this application. An apparatus for implementing a function of the network device may be a network device, or may be an apparatus, for example, a chip system, that can support the network device in implementing the function. The apparatus may be installed in the network device or used in matching with the network device.

To facilitate understanding of content of the solutions, the following further explains some terms in embodiments of this application, to facilitate understanding by a person skilled in the art. This part is merely for ease of understanding, and cannot be considered as a specific limitation on this application.

### 1. Antenna port

In this application, the antenna port may be understood as a transmit antenna that can be identified by a receiving-end device, or a transmit antenna that can be spatially distinguished. For example, one antenna port may be one physical antenna in a transmitting-end device, or may be a weighted combination of a plurality of physical antennas in the transmitting-end device.

One antenna port may correspond to one reference signal. In other words, an antenna port used to send and/or receive a reference signal may be referred to as a reference signal port, for example, a PTRS port or a DMRS port.

### 2. SDM scheme

The SDM scheme means that one transport block (or same transport blocks or a same transport block) is sent based on at least two "precoding information and number of layers" (precoding information and number of layers) or at least two sounding reference signal resource indicators (SRS resource indicators, SRIs), and different "precoding information and number of layers" or different SRIs are associated with different parts of one transport block.

Alternatively, the SDM scheme means that at least two antenna panels jointly send one transport block. Different antenna panels send different parts of the transport block. Optionally, the at least two antenna panels may be located on a terminal device.

It should be understood that "same transport blocks or a same transport block" herein means that information (or data) carried in two or more transport blocks is the same. Alternatively, "same transport blocks or a same transport block" means different redundancy versions (redundancy versions) of one transport block.

In this application, the antenna panel may be referred to as a panel (panel) for short. The antenna panel may be an antenna set. Optionally, the antenna panel mentioned in this application may also be described as an antenna set. The antenna set may be an antenna set that can independently or separately control transmit power. The antenna set may alternatively be an antenna set capable of independent or separate timing. The antenna set may alternatively be an antenna set that independently or separately performs modulation and coding.

Optionally, the antenna panel may be a capability value set in a capability value set list of the terminal device. Therefore, the antenna panel mentioned in this application may also be described as a "capability set". The capability value set may include a number of sounding reference signal (sounding reference signal, SRS) ports, a maximum number of SRS ports, a number of layers for uplink (uplink, UL) sending, a maximum number of layers for UL sending, a coherence type of an antenna port, and the like.

Optionally, there is a correspondence between the capability value set and a synchronization signal and physical broadcast channel block (synchronization signal and physical broadcast channel block, SSB) resource indicator (SSB resource indicator, SSBRI), or there is a correspondence between the capability value set and a channel state information reference signal (channel state information reference signal, CSI-RS) resource indicator (CRI-RS resource indicator, CRI). Therefore, an antenna panel may be an SSBRI or a CRI.

Optionally, the antenna panel mentioned in this application may also be described as the SSBRI or the CRI.

Optionally, the correspondence between the capability value set and the SSBRI or the correspondence between the capability value set and the CRI may be determined by the terminal device. The terminal device may report the correspondence between the capability value set and the SSBRI or the correspondence between the capability value set and the CRI to a network device in beam reporting. Alternatively, the terminal device may report the capability value set, the SSBRI, or the CRI to the network device.

Optionally, the antenna panel mentioned in this application may be an SRS set. Therefore, the antenna panel mentioned in this application may also be referred to as the SRS set.

Optionally, a definition of one antenna panel may dynamically change. For example, at a moment 1, one antenna panel is a capability set including four SRS ports. At a moment 2 after the moment 1, the antenna panel may be a capability set including two SRS ports.

### 3. SFN scheme

The SFN scheme means that one transport block (or same transport blocks or a same transport block) is sent based on at least two "precoding information and number of layers" or at least two SRIs, and different "precoding information and number of layers" or different SRIs are associated with a same part of one transport block.

Alternatively, the SFN scheme means that at least two antenna panels jointly send a same transport block. Optionally, the at least two antenna panels may be located on the terminal device.

### 4. sTRP scheme

The sTRP scheme means that one transport block is sent based on one "precoding information and number of layers" or one SRI.

Alternatively, the sTRP scheme means that the terminal device sends one transport block to the network device through one antenna panel, the sTRP scheme means that the terminal device sends the transport block to the network device based on one antenna panel, or the sTRP scheme means that the terminal device sends the transport block to the network device on one antenna panel. For example, the terminal device sends one transport block to one TRP of the network device through the antenna panel. Alternatively, the terminal device sends one transport block to each of two TRPs of the network device through the antenna panel.

### 5. Time domain multiplexing (time domain multiplexing, TDM) scheme

The TDM scheme means that one antenna panel on the terminal device sends data to different TRPs of the network device in a time division manner. For example, at the moment 1, the antenna panel sends data to one TRP of the network device, and at the moment 2, the antenna panel sends data to another TRP of the network device.

Alternatively, the TDM scheme means that a plurality of antenna panels of the terminal device send data to different TRPs of the network device in a time division manner. For example, at the moment 1, one of the plurality of antenna panels sends data to one TRP of the network device, and at the moment 2, another antenna panel in the plurality of antenna panels sends data to another TRP of the network device.

Alternatively, the TDM scheme means that same transport blocks are respectively sent at at least two moments based on at least two "precoding information and number of layers" or at least two sounding reference signal resource indicators. For example, the TDM scheme means that same transport blocks are respectively sent at at least two moments based on two "precoding information and number of layers" or two sounding reference signal resource indicators.

The moment may be understood as a time unit. Correspondingly, a first moment and a second moment may be understood as a first time unit and a second time unit. In this case, the TDM scheme may be understood as follows: Same transport blocks are sent in at least two time units through at least one antenna panel, where the transport block is sent in each of the at least two time units through one antenna panel. In this case, the first time unit and the second time unit do not overlap.

The time unit may include, for example, at least one of the following: a frame, a subframe, a slot, and a symbol. In NR, duration of a frame is 10 milliseconds (ms), each frame is divided into 10 subframes, and a length of each subframe is 1 ms. Each subframe is divided into several slots. When a cyclic prefix (cyclic prefix, CP) is a normal cyclic prefix (normal CP, NCP), each slot includes 14 symbols. When the cyclic prefix is an extended cyclic prefix (extended CP, ECP), each slot includes 12 symbols. Certainly, with evolution of communication technologies, a number of symbols included in one slot may alternatively be another value. This is not limited in this application. The symbol in this application may be an orthogonal frequency-division multiplexing (orthogonal frequency-division multiplexing, OFDM) symbol.

It should be understood that a base station may indicate the TDM scheme, the SDM scheme, or the SFN scheme. After indicating the TDM scheme, the base station may further indicate, by using downlink control information (downlink control information, DCI), the terminal device to use the TDM scheme or the sTRP scheme. After indicating the SDM scheme, the base station may further indicate, by using DCI, the terminal device to use the SDM scheme or the sTRP scheme. After indicating the SFN scheme, the base station may further indicate, by using DCI, the terminal device to use the SFN scheme or the sTRP scheme. In this way, the terminal device may send a PTRS, a DMRS, and/or the like based on a corresponding scheme. Therefore, the terminal device further needs to learn of a PTRS port and/or a DMRS port that may be used. Generally, the terminal device may learn of, by using the DCI, a PTRS port and/or a DMRS port to be used. However, for an SDM scheme, SFN scheme, or sTRP scheme scenario, when the DCI indicates the PTRS port and/or the DMRS port, bit redundancy may exist. In other words, bit overheads of the DCI are excessively high. In view of this, this application provides a communication method, to resolve this problem.

The following describes embodiments of this application in detail. Specifically, a terminal device in the following may be the terminal device in FIG. 1, and a network device in the following may be the network device in FIG. 1. It should be noted that names of messages between network elements, names of parameters in the messages, or the like in the following embodiments are merely examples, and there may be other names during specific implementation. This is not specifically limited in embodiments of this application.

FIG. 2 shows a communication method according to an embodiment of this application. The communication method includes but is not limited to the following steps.

201: A terminal device receives first information, where the first information indicates a first transmission scheme, and the first transmission scheme includes an SDM scheme or an SFN scheme.

Correspondingly, a network device sends the first information.

In this application, sending may be understood as direct sending or relay sending, and correspondingly, receiving may be understood as direct receiving or relay receiving. For example, in a possible implementation, in a direct receiving case, step 201 may be understood as follows: The terminal device receives the first information from the network device. Correspondingly, the network device sends the first information to the terminal device. In another possible implementation, in a relay sending case, step 201 may be understood as follows: The terminal device receives the first information from the network device via a relay device. Correspondingly, the network device sends the first information to the terminal device via the relay device. The relay device may be, for example, a relay base station, for example, a micro base station. Alternatively, the relay device may be a relay terminal, for example, an idle terminal. Alternatively, the relay device may be a relay transceiver node, for example, a network entity like customer premise equipment (customer premise equipment, CPE), a relay transceiver, or a relay agent.

Optionally, the first information may be multi-panel scheme (multipanelscheme). In a possible implementation, the first information may be carried in higher layer signaling. It may also be understood as that multipanelscheme is configured in the higher layer signaling, to indicate the SDM scheme or the SFN scheme. In another possible implementation, multipanelscheme is not configured in the higher layer signaling, that is, a TDM scheme is indicated by default. In other words, after receiving the higher layer signaling in which multipanelscheme is not configured, the terminal device may learn that the network device indicates the TDM scheme.

The higher layer signaling may be, for example, radio resource control (radio resource control, RRC) signaling.

202: The network device sends second information, where the second information includes a first field, the first field indicates the terminal device to use the first transmission scheme or a second transmission scheme, the second transmission scheme is an sTRP scheme, the second information further includes a second field or the second information further includes a second field and a third field, the second field is a PTRS-DMRS field (which may also be referred to as a 1^{st} PTRS-DMRS field), the third field is a 2^{nd} PTRS-DMRS field, and the third field is 0 bits.

Correspondingly, the terminal device receives the second information.

Optionally, the second information may be DCI. In other words, the second information is carried in the DCI.

It should be noted that a field (for example, the first field, the second field, or the third field) mentioned in this application may be described as a field. For example, the first field may be described as a first field, the second field may be described as a second field, and the third field may be described as a third field. A specific name is not limited in this application.

The first field may be a sounding reference signal resource set indicator field (SRS resource set indicator field). In other words, when multipanelscheme is configured in the higher layer signaling, the network device may indicate, by using the first field, the terminal device to use the SDM scheme or the sTRP scheme, or the network device may indicate, by using the first field, the terminal device to use the SFN scheme or the sTRP scheme. Details are as follows:
1. When the network device indicates, by using the first field, the terminal device to use the SDM scheme or the sTRP scheme, and when a value of the first field is 00 or 01, it indicates the terminal device to use the sTRP scheme, and may further indicate the terminal device to use a fourth field in the second information. The fourth field may be an SRI field (which may also be referred to as a 1^{st} SRI field) or a transmission precoding matrix indicator (transmission precoding matrix indicator, TPMI) field (which may also be referred to as a 1^{st} TPMI field), and the fourth field indicates a precoding matrix to be used by the terminal device. When a value of the first field is 10, it indicates the terminal device to use the SDM scheme, and may further indicate the terminal device to use a fourth field and a fifth field in the second information. The fifth field may be a 2^{nd} SRI field or a 2^{nd} TPMI field, and the fifth field indicates a precoding matrix to be used by the terminal device. The precoding matrices indicated by the fourth field and the fifth field may be the same or different. When a value of the first field is 11, it indicates reserved.
2. When the network device indicates, by using the first field, the terminal device to use the SFN scheme or the sTRP scheme, and when a value of the first field is 00 or 01, it indicates the terminal device to use the sTRP scheme, and may further indicate the terminal device to use a fourth field. When a value of the first field is 10, it indicates the terminal device to use the SFN scheme, and may further indicate the terminal device to use a fourth field and a fifth field. When a value of the first field is 11, it indicates reserved.

It should be noted that a value of a field (for example, the first field) and a meaning corresponding to the field are merely examples in this application. This is not limited in this application.

Optionally, when the first transmission scheme is the SDM scheme or the SFN scheme, or multipanelscheme configured in the higher layer signaling is the SDM scheme or the SFN scheme, a length of the 1^{st} SRI field is determined based on a larger value between a maximum number of layers associated with the SDM scheme or the SFN scheme and a maximum number of layers associated with the sTRP scheme. In other words, the length of the 1^{st} SRI field is determined based on max {the maximum number of layers associated with the SDM scheme or the SFN scheme, the maximum number of layers associated with the sTRP scheme}. Otherwise (for example, multipanelscheme is not configured in the higher layer signaling, that is, the TDM scheme is indicated by default), a length of the 1^{st} SRI field is determined based on a maximum number of layers associated with the sTRP scheme or a maximum number of layers associated with the TDM scheme.

Optionally, when the first transmission scheme is the SDM scheme or the SFN scheme, or multipanelscheme configured in the higher layer signaling is the SDM scheme or the SFN scheme, and the network device configures a sending scheme to a non-codebook (non-codebook)-based sending scheme, a length of the 1^{st} SRI field is determined based on a larger value between a maximum number of layers associated with the SDM scheme or the SFN scheme and a maximum number of layers associated with the sTRP scheme. In other words, the length of the 1^{st} SRI field is determined based on max {the maximum number of layers associated with the SDM scheme or the SFN scheme, the maximum number of layers associated with the sTRP scheme}. Otherwise (for example, multipanelscheme is not configured in the higher layer signaling, that is, the TDM scheme is indicated by default), a length of the 1^{st} SRI field is determined based on a maximum number of layers associated with the sTRP scheme or a maximum number of layers associated with the TDM scheme.

Optionally, when the first transmission scheme is the SDM scheme or the SFN scheme, or multipanelscheme configured in the higher layer signaling is the SDM scheme or the SFN scheme, a length of the 2^{nd} SRI field is determined based on a maximum number of layers associated with the SDM scheme or the SFN scheme. Otherwise (for example, multipanelscheme is not configured in the higher layer signaling, that is, the TDM scheme is indicated by default), a length of the 2^{nd} SRI field is determined based on a maximum number of layers associated with the sTRP scheme or a maximum number of layers associated with the TDM scheme.

Optionally, when the first transmission scheme is the SDM scheme or the SFN scheme, or multipanelscheme configured in the higher layer signaling is the SDM scheme or the SFN scheme, and the network device configures a sending scheme to a non-codebook (non-codebook)-based sending scheme, a length of the 2^{nd} SRI field is determined based on a maximum number of layers associated with the SDM scheme or the SFN scheme. Otherwise (for example, multipanelscheme is not configured in the higher layer signaling, that is, the TDM scheme is indicated by default), a length of the 2^{nd} SRI field is determined based on a maximum number of layers associated with the sTRP scheme or a maximum number of layers associated with the TDM scheme. Optionally, when multipanelscheme is not configured in the higher layer signaling, the network device may indicate, by using the first field, the terminal device to use the TDM scheme or the sTRP scheme. Specifically, when the value of the first field is 00 or 01, it indicates the terminal device to use the sTRP scheme, and may further indicate the terminal device to use the fourth field. When the value of the first field is 10 or 11, it indicates the terminal device to use the TDM scheme, and may further indicate the terminal device to use the fourth field and the fifth field. When the value of the first field is 10, it may further indicate the terminal device to first perform sending to a TRP associated with a sounding reference signal resource set 1, and then perform sending to a TRP associated with a sounding reference signal resource set 2. When the value of the first field is 11, it may further indicate the terminal device to first perform sending to a TRP associated with a sounding reference signal resource set 2, and then perform sending to a TRP associated with a sounding reference signal resource set 1.

In step 202, that the second information further includes the second field may be understood as follows: The second information further includes the second field, and does not include the third field. In other words, when the first information indicates the SDM scheme or the SFN scheme, the second information includes the second field and does not include the third field. In other words, when multipanelscheme is configured in the higher layer signaling, the second information includes the second field, and does not include the third field. Similarly, in step 202, that the second information further includes the second field and the third field, and the third field is 0 bits may be understood as follows: When the first information indicates the SDM scheme or the SFN scheme, the second information further includes the second field and the third field, and the third field is 0 bits. In other words, when multipanelscheme is configured in the higher layer signaling, the second information further includes the second field and the third field, and the third field is 0 bits. In this case, the second field indicates at least one DMRS port associated with at least one PTRS port. For example, details are as follows:
1. When the first field indicates the terminal device to use the SDM scheme or the SFN scheme, a high-order bit of the second field indicates a DMRS port associated with one PTRS port, and the DMRS port is associated with the fourth field (the fourth field is an SRI field or a TPMI field); and a low-order bit of the second field indicates a DMRS port associated with another PTRS port, and the DMRS port is associated with the fifth field (the fifth field is a 2^{nd} SRI field or a 2^{nd} TPMI field). Alternatively, a low-order bit of the second field indicates a DMRS port associated with one PTRS port, and the DMRS port is associated with the fourth field; and a high-order bit of the second field indicates a DMRS port associated with another PTRS port, and the DMRS port is associated with the fifth field.
2. When the first field indicates the terminal device to use the SDM scheme, and a maximum number of PTRS ports associated with the SDM scheme is 2, or when the first field indicates the terminal device to use the SDM scheme, and a number of PTRS ports used by the terminal device is 2 (the PTRS ports are associated with the SDM scheme), a high-order bit of the second field indicates a DMRS port associated with one of the PTRS ports, and the DMRS port is associated with the fourth field; and a low-order bit of the second field indicates a DMRS port associated with the other PTRS port, and the DMRS port is associated with the fifth field. Alternatively, a low-order bit of the second field indicates a DMRS port associated with one of the PTRS ports, and the DMRS port is associated with the fourth field; and a high-order bit of the second field indicates a DMRS port associated with the other PTRS port, and the DMRS port is associated with the fifth field.
3. When the first field indicates the terminal device to use the SDM scheme, and a maximum number of PTRS ports associated with the SDM scheme is 1, or when the first field indicates the terminal device to use the SDM scheme, and a number of PTRS ports used by the terminal device is 1 (the PTRS port is associated with the SDM scheme), the second field indicates a DMRS port associated with one PTRS port, and the DMRS port is associated with the fourth field and the fifth field.
4. When the first field indicates the terminal device to use the SFN scheme, and a number of PTRS ports used by the terminal device is 1 (the PTRS port is associated with the SFN scheme), or when the first field indicates the terminal device to use the sTRP scheme, and a number of PTRS ports used by the terminal device is 1 (the PTRS port is associated with the sTRP scheme), or when the first field indicates the terminal device to use the SFN scheme, and a maximum number of PTRS ports associated with the SFN scheme is 1, or when the first field indicates the terminal device to use the sTRP scheme, and a maximum number of PTRS ports associated with the sTRP scheme is 1, the second field indicates a DMRS port associated with one PTRS port, and the DMRS port is associated with the fourth field.
5. When the first field indicates the terminal device to use the SFN scheme, and a number of PTRS ports used by the terminal device is 2 (the PTRS ports are associated with the SFN scheme), or when the first field indicates the terminal device to use the sTRP scheme, and a number of PTRS ports used by the terminal device is 2 (the PTRS ports are associated with the sTRP scheme), or when the first field indicates the terminal device to use the SFN scheme, and a maximum number of PTRS ports associated with the SFN scheme is 2, or when the first field indicates the terminal device to use the sTRP scheme, and a maximum number of PTRS ports associated with the sTRP scheme is 2, a high-order bit of the second field indicates a DMRS port associated with one of the PTRS ports, and the DMRS port is associated with the fourth field; and a low-order bit of the second field indicates a DMRS port associated with the other PTRS port, and the DMRS port is associated with the fourth field.
6. When the first field indicates the terminal device to use the SFN scheme, and a number of PTRS ports used by the terminal device is 2 (the PTRS ports are associated with the SFN scheme), or when the first field indicates the terminal device to use the sTRP scheme, and a number of PTRS ports used by the terminal device is 2 (the PTRS ports are associated with the sTRP scheme), or when the first field indicates the terminal device to use the SFN scheme, and a maximum number of PTRS ports associated with the SFN scheme is 2, or when the first field indicates the terminal device to use the sTRP scheme, and a maximum number of PTRS ports associated with the sTRP scheme is 2, a low-order bit of the second field indicates a DMRS port associated with one of the PTRS ports, and the DMRS port is associated with the fourth field; and a high-order bit of the second field indicates a DMRS port associated with the other PTRS port, and the DMRS port is associated with the fourth field.

Optionally, in the foregoing manner 2 or manner 3, the maximum number of PTRS ports associated with the SDM scheme may be indicated by fifth information. For example, the terminal device may receive the fifth information. In the foregoing manner 4, manner 5, or manner 6, the maximum number of PTRS ports associated with the SFN scheme may be indicated by sixth information. For example, the terminal device may receive the sixth information. The maximum number of PTRS ports associated with the sTRP scheme may be indicated by seventh information. For example, the terminal device may receive the seventh information. The fifth information, the sixth information, or the seventh information may be carried in higher layer signaling. Optionally, one or more of the fifth information, the sixth information, and the seventh information may be carried in same higher layer signaling or different higher layer signaling. Optionally, one or more of the fifth information, the sixth information, and the seventh information and the first information may be carried in same higher layer signaling or different higher layer signaling. This is not limited herein.

Optionally, for any one of the foregoing manners 1 to 6, the second field may be, for example, 2 bits.

It should be noted that, in this application, for an association relationship between the PTRS port and the DMRS port, refer to a specification in a protocol or a standard of communication technologies. This is not limited herein. In addition, the PTRS port used by the terminal device mentioned in this application may be a PTRS port actually used by the terminal device, and a maximum number of PTRS ports associated with a scheme (for example, the SDM scheme, the SFN scheme, or the sTRP scheme) is a maximum number of PTRS ports configured by the network device. Optionally, the number of PTRS ports used by the terminal device may be less than or equal to the maximum number of PTRS ports configured by the network device. For example, the maximum number of PTRS ports configured by the network device is 2 (the PTRS ports are associated with the sTRP scheme). In this case, the number of PTRS ports used by the terminal device may be 1 or 2. For another example, the maximum number of PTRS ports configured by the network device is 2 (the PTRS ports are associated with the SDM scheme). In this case, the number of PTRS ports used by the terminal device may be 2.

Optionally, when a maximum number of layers associated with the second transmission scheme is greater than, equal to, or less than 2, the third field is 0 bits.

The maximum number of layers associated with the second transmission scheme is indicated by third information. For example, the terminal device may receive the third information. Optionally, the third information may be a maximum rank (maxrank). In a possible implementation, the third information may be carried in higher layer signaling. It may also be understood as that maxrank is configured in the higher layer signaling, so that the terminal device can learn of the maximum number of layers associated with the second transmission scheme.

In a possible implementation, when both a maximum number of layers associated with the first transmission scheme and the maximum number of layers associated with the second transmission scheme are equal to 1, the second field is 0 bits. In other words, when the first information indicates the SDM scheme or the SFN scheme, and both the maximum number of layers associated with the first transmission scheme and the maximum number of layers associated with the second transmission scheme are equal to 1, the second field is 0 bits. In other words, when multipanelscheme is configured in the higher layer signaling, and both the maximum number of layers associated with the first transmission scheme and the maximum number of layers associated with the second transmission scheme are equal to 1, the second field is 0 bits. In another possible implementation, when a maximum number of layers associated with the first transmission scheme is greater than 1 or the maximum number of layers associated with the second transmission scheme is greater than 1, the second field is greater than 0 bits. When the maximum number of layers associated with the first transmission scheme is greater than 1, the maximum number of layers associated with the second transmission scheme may be greater than or equal to 1. Similarly, when the maximum number of layers associated with the second transmission scheme is greater than 1, the maximum number of layers associated with the first transmission scheme may be greater than or equal to 1.

The maximum number of layers associated with the first transmission scheme is indicated by fourth information. For example, the terminal device may receive the fourth information. Optionally, if the first transmission scheme is the SDM scheme, the fourth information may be maximum rank_spatial domain multiplexing (maxrank_SDM); or if the first transmission scheme is the SFN scheme, the fourth information may be maximum rank_single frequency network (maxrank_SFN). In a possible implementation, the fourth information may be carried in higher layer signaling. It may also be understood as that maxrank_SDM is configured in the higher layer signaling, so that the terminal device can learn of a maximum number of layers associated with the SDM scheme; or maxrank_SFN is configured in the higher layer signaling, so that the terminal device can learn of a maximum number of layers associated with the SFN scheme.

That the second field is greater than 0 bits may also be understood as follows: The second field is 1 bit or 2 bits.

Optionally, one or more of the first information, the third information, and the fourth information may be carried in same higher layer signaling or different higher layer signaling. This is not limited herein.

Optionally, when multipanelscheme is not configured in the higher layer signaling, there may be two cases for the PTRS-DMRS field included in the second information. Details are as follows:
1. The first field (the first field is a sounding reference signal resource set indicator field) exists, the maximum number of layers associated with the second transmission scheme (the second transmission scheme is the sTRP scheme) is further configured in the higher layer signaling, the maximum number of layers associated with the second transmission scheme is greater than 2, the second information further includes the second field and the third field, and the third field is 2 bits. In this case, the second field indicates a DMRS port associated with one PTRS port, and the DMRS port is associated with the fourth field (the fourth field is an SRI field or a TPMI field). The third field indicates a DMRS port associated with another PTRS port, and the DMRS port is associated with the fifth field (the fifth field is a 2^{nd} SRI field or a 2^{nd} TPMI field).
2. The value of the first field is 10 or 11, the maximum number of layers associated with the second transmission scheme is equal to 2, and the second information further includes the second field, and does not include the third field. In this case, a high-order bit of the second field indicates a DMRS port associated with a PTRS port, and the DMRS port is associated with the fourth field. A low-order bit of the second field indicates a DMRS port associated with a PTRS port, and the DMRS port is associated with the fifth field.

Optionally, the method further includes: The terminal device sends capability information, where the capability information indicates that the terminal device supports full-coherent uplink transmission. In this case, a number of PTRS ports associated with the SDM scheme may be greater than or equal to 2. In other words, the number of PTRS ports associated with the SDM scheme is predefined or preconfigured to be greater than or equal to 2. The capability information may be carried in RRC signaling.

It should be noted that the predefinition mentioned in this application means a predefinition in a protocol, and the preconfiguration mentioned in this application means information recorded in hardware and/or software in the terminal device or the network device.

It can be learned that in the foregoing implementation, when the first information indicates the SDM scheme or the SFN scheme, the second information may include two PTRS-DMRS fields, and one of the PTRS-DMRS fields is 0 bits. In this way, redundant bits of the DCI can be avoided, thereby reducing bit overheads of the DCI. In addition, the first field in the second information clearly indicates a specific transmission scheme to be used by the terminal device.

The foregoing mainly describes the solutions provided in this application from a perspective of interaction between devices. It may be understood that, in the foregoing implementations, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the terminal device or the network device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

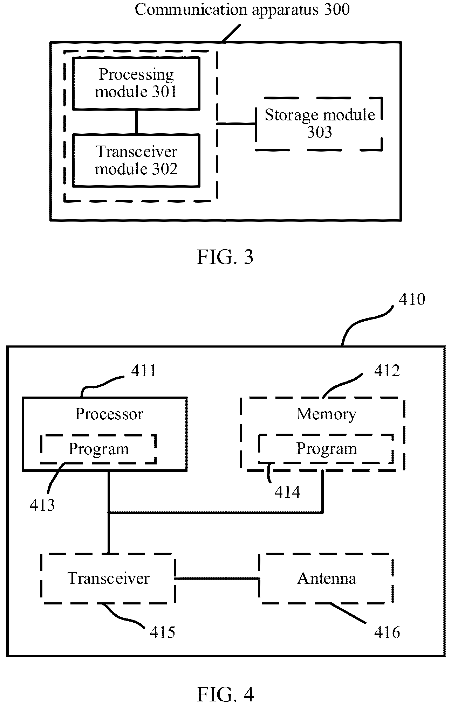

FIG. 3 is a diagram of a structure of a communication apparatus according to an embodiment of this application. The communication apparatus 300 may be used in the method shown in the embodiment in FIG. 2. As shown in FIG. 3, the communication apparatus 300 includes a processing module 301 and a transceiver module 302. The processing module 301 may be one or more processors, and the transceiver module 302 may be a transceiver or a communication interface. The communication apparatus may be configured to implement a function of the terminal device or the network device in any one of the foregoing method embodiments, or configured to implement a function of a network element in any one of the foregoing method embodiments. The network element or network function may be a network element in a hardware device, a software function running on dedicated hardware, or an instantiated virtualization function on a platform (for example, a cloud platform). Optionally, the communication apparatus 300 may further include a storage module 303, configured to store program code and data of the communication apparatus 300.

In an instance, when the communication apparatus is used as a terminal device or a chip used in the terminal device, and performs the steps performed by the terminal device in the foregoing method embodiments, the transceiver module 302 is specifically configured to perform a sending action and/or a receiving action performed by the terminal device in the embodiment in FIG. 2, for example, support the terminal device in performing another process of the technology described in this specification; and the processing module 301 may be configured to support the communication apparatus 300 in performing a processing action in the foregoing method embodiments, for example, support the terminal device in performing another process of the technology described in this specification.

For example, the transceiver module 302 is configured to: receive first information, where the first information indicates a first transmission scheme, and the first transmission scheme includes an SDM scheme or an SFN scheme; and receive second information, where the second information includes a first field, the first field indicates the terminal device to use the first transmission scheme or a second transmission scheme, and the second transmission scheme is an sTRP scheme. The second information further includes a second field and a third field, the second field is a PTRS-DMRS field, the third field is a 2^{nd} PTRS-DMRS field, and the third field is 0 bits.

Optionally, the second field indicates at least one DMRS port associated with at least one PTRS port.

Optionally, the transceiver module 302 is further configured to receive third information, where the third information indicates a maximum number of layers associated with the second transmission scheme. When the maximum number of layers associated with the second transmission scheme is greater than 2, the third field is 0 bits.

Optionally, the transceiver module 302 is further configured to send capability information, where the capability information indicates that the terminal device supports full-coherent uplink transmission; and a number of PTRS ports associated with the SDM scheme is greater than or equal to 2.

Optionally, the transceiver module 302 is further configured to receive fourth information, where the fourth information indicates a maximum number of layers associated with the first transmission scheme. When both the maximum number of layers associated with the first transmission scheme and the maximum number of layers associated with the second transmission scheme are equal to 1, the second field is 0 bits.

In another instance, when the communication apparatus is used as a network device or a chip used in the network device, and performs the steps performed by the network device in the foregoing method embodiments, the transceiver module 302 is specifically configured to perform a sending action and/or a receiving action performed by the network device in the embodiment in FIG. 2, for example, support the network device in performing another process of the technology described in this specification; and the processing module 301 may be configured to support the communication apparatus 300 in performing a processing action in the foregoing method embodiments, for example, support the network device in performing another process of the technology described in this specification.

For example, the transceiver module 302 is configured to: send first information, where the first information indicates a first transmission scheme, and the first transmission scheme includes an SDM scheme or an SFN scheme; and send second information, where the second information includes a first field, the first field indicates a terminal device to use the first transmission scheme or a second transmission scheme, and the second transmission scheme is an sTRP scheme. The second information further includes a second field and a third field, the second field is a PTRS-DMRS field, the third field is a 2^{nd} PTRS-DMRS field, and the third field is 0 bits.

Optionally, the second field indicates at least one DMRS port associated with at least one PTRS port.

Optionally, the transceiver module 302 is further configured to send third information, where the third information indicates a maximum number of layers associated with the second transmission scheme. When the maximum number of layers associated with the second transmission scheme is greater than 2, the third field is 0 bits.

Optionally, the transceiver module 302 is further configured to send capability information, where the capability information indicates that the terminal device supports full-coherent uplink transmission; and a number of PTRS ports associated with the SDM scheme is greater than or equal to 2.

Optionally, the transceiver module 302 is further configured to send fourth information, where the fourth information indicates a maximum number of layers associated with the first transmission scheme. When both the maximum number of layers associated with the first transmission scheme and the maximum number of layers associated with the second transmission scheme are equal to 1, the second field is 0 bits.

In a possible implementation, when the terminal device or the network device is a chip, the transceiver module 302 may be a communication interface, a pin, a circuit, or the like. The communication interface may be configured to input to-be-processed data to a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 301 may be a processor. The processor may execute computer-executable instructions stored in the storage module, to enable the chip to perform the method in the embodiment shown in FIG. 2. Further, the processor may include a controller, an arithmetic unit, and a register. For example, the controller is mainly responsible for instruction decoding, and sending a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a number of register operations, intermediate operation results, and the like that are temporarily stored during instruction execution. During specific implementation, a hardware architecture of the processor may be an ASIC architecture, a microprocessor without interlocked piped stages architecture (microprocessor without interlocked piped stages architecture, MIPS), an advanced reduced instruction set computing machines (advanced RISC machines, ARM) architecture, a second processor (network processor, NP) architecture, or the like. The processor may be a single-core processor or a multicore processor. The storage module may be a storage module inside the chip, for example, a register or a cache. Alternatively, the storage module may be a storage module outside the chip, for example, a ROM, another type of static storage device that can store static information and instructions, or a RAM.

It should be noted that functions respectively corresponding to the processor and the interface may be implemented by using a hardware design, may be implemented by using a software design, or may be implemented by using a combination of software and hardware. This is not limited herein.

FIG. 4 is a diagram of a structure of another communication apparatus according to an embodiment of this application. It may be understood that the communication apparatus 410 includes means in necessary forms, such as modules, units, elements, circuits, or interfaces, which are appropriately configured together to perform the solution. The communication apparatus 410 may be the foregoing terminal device or network device, or may be a component (for example, a chip) in these devices, to implement the method described in the foregoing method embodiments. The communication apparatus 410 includes one or more processors 411. The processor 411 may be a general-purpose processor, a dedicated processor, or the like. For example, the processor may be a baseband processor or a central processing unit. The baseband processor may be configured to process a communication protocol and communication data. The central processing unit may be configured to control the communication apparatus (for example, the terminal device, the network device, or the chip), to execute a software program and process data of the software program.

Optionally, in a design, the processor 411 may include a program 413 (which may also be sometimes referred to as code or instructions). The program 413 may be run on the processor 411, to enable the communication apparatus 410 to perform the method described in the foregoing embodiments. In another possible design, the communication apparatus 410 includes a circuit (not shown in FIG. 4), and the circuit is configured to implement a function of the terminal device, the network device, or the like in the foregoing embodiments. Optionally, the communication apparatus 410 may include one or more memories 412, and a program 414 (which may also be sometimes referred to as code or instructions) is stored in the memory 412. The program 414 may be run on the processor 411, to enable the communication apparatus 410 to perform the method described in the foregoing method embodiments.

Optionally, the processor 411 and/or the memory 412 may further store data. The processor and the memory may be separately disposed, or may be integrated together.

Optionally, the communication apparatus 410 may further include a transceiver 415 and/or an antenna 416. The processor 411 may also be sometimes referred to as a processing unit, and controls the communication apparatus (for example, the terminal device or the network device). The transceiver 415 may also be sometimes referred to as a transceiver unit, a transceiver machine, a transceiver circuit, a transceiver, or the like, and is configured to implement a transceiver function of the communication apparatus through the antenna 416.

An embodiment of this application further provides a communication apparatus. The communication apparatus includes at least one processor and a memory. The memory is configured to store a computer program or instructions. The at least one processor is configured to execute the computer program or the instructions in the memory, to perform the method in any one of the implementations in the embodiment in FIG. 2.

An embodiment of this application further provides a computer-readable storage medium. The computer-readable storage medium stores computer instructions. When the computer instructions are executed, a computer is enabled to perform the method in any one of the implementations in the embodiment in FIG. 2.

An embodiment of this application further provides a computer program product. The computer program product includes computer program code. When the computer program code is run by a computer, the computer is enabled to perform the method in any one of the implementations in the embodiment in FIG. 2.

An embodiment of this application further provides a chip. The chip includes at least one processor and an interface. The processor is configured to read and execute instructions stored in a memory. When the instructions are run, the chip is enabled to perform the method in any one of the implementations in the embodiment in FIG. 2.

The foregoing units described as separate parts may or may not be physically separate, and parts displayed as units may or may not be physical units, that is, may be located in one position, or may be distributed on a plurality of network units. Some or all of the units may be selected based on an actual requirement, to achieve the objectives of the solutions in embodiments of this application. In addition, network element units in embodiments of this application may be integrated into one processing unit, each of the units may exist alone physically, or two or more units may be integrated into one unit. The integrated unit may be implemented in a form of hardware, or may be implemented in a form of a software network element unit.

When the integrated unit is implemented in the form of the software network element unit and sold or used as an independent product, the integrated unit may be stored in a computer-readable storage medium. Based on such an understanding, an essentially contributing part in the technical solutions of this application or all or some of the technical solutions may be embodied in a form of a software product. The computer software product is stored in a storage medium and includes several instructions for instructing a computer device (which may be a personal computer, a terminal device, a cloud server, a network device, or the like) to perform all or some of the steps of the method in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc. The foregoing descriptions are merely specific implementations of this application, but are not intended to limit the protection scope of this application. Various equivalent modifications or replacements readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information, wherein the first information indicates a first transmission scheme, and the first transmission scheme comprises a spatial domain multiplexing SDM scheme or a single frequency network SFN scheme; and
receiving second information, wherein the second information comprises a first field, the first field indicates a terminal device to use the first transmission scheme or a second transmission scheme, and the second transmission scheme is a single transmission reception point sTRP scheme, wherein
the second information further comprises a second field and a third field, the second field is a phase tracking reference signal PTRS-demodulation reference signal DMRS field, the third field is a 2^{nd} PTRS-DMRS field, and the third field is 0 bits.

2. The method according to claim 1, wherein the second field indicates at least one DMRS port associated with at least one PTRS port.

3. The method according to claim 1 or 2, wherein when a maximum number of layers associated with the second transmission scheme is greater than 2, the third field is 0 bits, wherein
the maximum number of layers associated with the second transmission scheme is indicated by third information.

4. The method according to any one of claims 1 to 3, wherein the method further comprises:
sending capability information, wherein the capability information indicates that the terminal device supports full-coherent uplink transmission, wherein
a number of PTRS ports associated with the SDM scheme is greater than or equal to 2.

5. The method according to any one of claims 1 to 4, wherein when both a maximum number of layers associated with the first transmission scheme and the maximum number of layers associated with the second transmission scheme are equal to 1, the second field is 0 bits, wherein
the maximum number of layers associated with the first transmission scheme is indicated by fourth information, and the maximum number of layers associated with the second transmission scheme is indicated by the third information.

6. The method according to any one of claims 1 to 4, wherein when a maximum number of layers associated with the first transmission scheme is greater than 1 or the maximum number of layers associated with the second transmission scheme is greater than 1, the second field is greater than 0 bits, wherein
the maximum number of layers associated with the first transmission scheme is indicated by fourth information, and the maximum number of layers associated with the second transmission scheme is indicated by the third information.

7. A communication method, comprising:
sending first information, wherein the first information indicates a first transmission scheme, and the first transmission scheme comprises a spatial domain multiplexing SDM scheme or a single frequency network SFN scheme; and
sending second information, wherein the second information comprises a first field, the first field indicates a terminal device to use the first transmission scheme or a second transmission scheme, and the second transmission scheme is a single transmission reception point sTRP scheme, wherein
the second information further comprises a second field and a third field, the second field is a PTRS-DMRS field, the third field is a 2^{nd} PTRS-DMRS field, and the third field is 0 bits.

8. The method according to claim 7, wherein the second field indicates at least one demodulation reference signal DMRS port associated with at least one phase tracking reference signal PTRS port.

9. The method according to claim 7 or 8, wherein when a maximum number of layers associated with the second transmission scheme is greater than 2, the third field is 0 bits, wherein
the maximum number of layers associated with the second transmission scheme is indicated by third information.

10. The method according to any one of claims 7 to 9, wherein the method further comprises:
sending capability information, wherein the capability information indicates that the terminal device supports full-coherent uplink transmission, wherein
a number of PTRS ports associated with the SDM scheme is greater than or equal to 2.

11. The method according to any one of claims 7 to 10, wherein when both a maximum number of layers associated with the first transmission scheme and the maximum number of layers associated with the second transmission scheme are equal to 1, the second field is 0 bits, wherein
the maximum number of layers associated with the first transmission scheme is indicated by fourth information, and the maximum number of layers associated with the second transmission scheme is indicated by the third information.

12. The method according to any one of claims 7 to 10, wherein when a maximum number of layers associated with the first transmission scheme is greater than 1 or the maximum number of layers associated with the second transmission scheme is greater than 1, the second field is greater than 0 bits, wherein
the maximum number of layers associated with the first transmission scheme is indicated by fourth information, and the maximum number of layers associated with the second transmission scheme is indicated by the third information.

13. A communication apparatus, comprising a unit or a module configured to implement the method according to any one of claims 1 to 12.

14. A communication apparatus, wherein the communication apparatus comprises at least one processor and a memory, the memory is configured to store a computer program or instructions, and the at least one processor is configured to execute the computer program or the instructions in the memory, to perform the method according to any one of claims 1 to 12.

15. A communication system, wherein the communication system comprises a terminal device and a network device, wherein
the terminal device is configured to perform the method according to any one of claims 1 to 6; and
the network device is configured to perform the method according to any one of claims 7 to 12.

16. A computer-readable storage medium, wherein the computer-readable storage medium stores computer instructions, and when the computer instructions are executed, a computer is enabled to perform the method according to any one of claims 1 to 12.

17. A computer program product, wherein the computer program product comprises computer program code, and when the computer program code is run by a computer, the computer is enabled to perform the method according to any one of claims 1 to 12.

18. A chip, wherein the chip comprises at least one processor and an interface, the processor is configured to read and execute instructions stored in a memory, and when the instructions are run, the chip is enabled to perform the method according to any one of claims 1 to 12.
